# EUROPÄISCHE PATENTSCHRIFT

(11) **EP 1 893 017 B1**
(45) Veröffentlichungstag und Bekanntmachung des Hinweises auf die Patenterteilung: **14.05.2014**
(21) Anmeldenummer: 06761946.0
(22) Anmeldetag: 27.05.2006
(51) Int. Cl.: A01N 37/40, A01N 25/04, A01N 43/70, A01P 13/00

(54) **ÖL-IN-WASSER-SUSPOEMULSIONEN, ENTHALTEND PFLANZENWIRKSAME HYDROXYBENZONITRILE**
OIL-IN-WATER SUSPOEMULSIONS CONTAINING PHYTOACTIVE HYDROXYBENZONITRILES
SUSPOEMULSIONS HUILE DANS L'EAU CONTENANT DES HYDROXYBENZONITRILES AGISSANT SUR LES PLANTES

(30) Priorität: 10.06.2005 EP 05012496
(43) Veröffentlichungstag der Anmeldung: 05.03.2008
(73) Patentinhaber: Bayer CropScience AG, 40789 Monheim (DE)
(72) Erfinder: FRISCH, Gerhard, 61273 Wehrheim (DE); RUDE, Janine, 65830 Kriftel (DE)
(86) Internationale Anmeldenummer: PCT/EP2006/005091
(87) Internationale Veröffentlichungsnummer: WO 2006/131227

(56) Entgegenhaltungen:
- EP-A- 1 642 498
- EP-A1- 0 306 376
- EP-A2- 0 261 492
- WO-A-02/49432
- WO-A-02/074082
- WO-A-2005/036962
- FR-A1- 2 753 603
- GB-A- 2 190 589

## Beschreibung

Die vorliegende Erfindung betrifft das Gebiet der Pflanzenschutzmittelformulierungen. Insbesondere betrifft die Erfindung Formulierungen in Form von Öl - in-Wasser Susposemulsionen (o/w Suspoemulsionen), welche einen oder mehrere herbizide Wirkstoffe aus der Gruppe der Hydroxybenzonitrile sowie mindestens einen weiteren agrochemischen Wirkstoff enthalten, der nicht zur Gruppe der Hydroxybenzonitrile gehört, wobei die Formulierungen frei von Alkylphenolpolyethoxylaten sind, und Naphthalin zu einem Anteil von kleiner 0.5% vorliegt.

Suspoemulsionen als solche sind bekannt und eignen sich als bevorzugte Formulierungsvariante für verschiedene Anwendungsbereiche, wenn verschiedene Wirkstoffe in gelöster und dispergierter Form in einem System vereinigt werden sollen. Anwendungsgebiete von Susposemulsionen (o/w = Öl-in-Wasser, wie auch w/o = Wasser-in-Öl) liegen beispielsweise im Bereich kosmetischer, pharmazeutischer, veterinärmedizinischer, sowie agrochemischer Substanzen (u.a. beschrieben in EP 0 514 768), aber auch im Bereich der Hygiene- und Reinigungsartikel bzw. im Farb- und Lackmittelsektor. Susposemulsionen vereinfachen die Dosierung und vermeiden die zwanghafte Bereitstellung von Kombinationspräparaten (Kombipacks).

Herbizide Wirkstoffe werden im Allgemeinen nicht in ihrer reinen Form eingesetzt. In Abhängigkeit von dem Anwendungsgebiet und der Anwendungsart, sowie von physikalischen, chemischen und biologischen Parametern werden die Wirkstoffe in Mischung mit üblichen Hilfs- und Zusatzstoffen als Wirkstoffformulierung eingesetzt. Auch die Kombinationen mit weiteren Wirkstoffen zur Erweiterung des Wirkungsspektrums und/oder zum Schutz der Kulturpflanzen (z.B. durch Safener) oder aber mit agrochemischen Wirkstoffen, die beispielsweise gegen Schädlinge gerichtet sind, sind bekannt.

So lassen sich im Pflanzenschutz allgemein agrochemische Wirkstoffe aus dem Bereich der Insektizide, Herbizide, Fungizide, Akarizide sinnvoll und gut in Form von Suspoemulsionen formulieren.

Formulierungen von herbiziden Wirkstoffen sollten im Allgemeinen eine hohe chemische und physikalische Stabilität, eine gute Applizierbarkeit und Anwenderfreundlichkeit und eine breite biologische Wirkung mit hoher Selektivität aufweisen. Als herbizider Wirkstoff aus der Gruppe der Hydroxybenzonitrile, wird beispielsweise Bromoxynil (3,5-Dibromo-4-hydroxybenzonitril) in Kombination mit Terbuthylazin (N²-*tert*-butyl-6-chloro-N⁴-ethyl-1,3,5-triazine-2,4-diamine) als wässrige Suspoemulsion (z.B. Gardobuc®) verwendet, wie in GB-A-2190589 beschrieben. Nachteil der diesen Produkten zu Grunde liegenden Formulierungen ist die Tatsache, dass sie unter anderem nicht-ionische Tenside aus der Gruppe der Alkylphenolpolyethoxylate (APE) und Naphthaline enthalten, die selbst sowie auch deren Abbauprodukte nach Freisetzung nur langsam abgebaut werden. Bezüglich ihrer physikalischen Eigenschaften ist diese Formulierung hochviskos, bildet viele Agglomerate aus und sedimentiert bei Lagerung.

Alternativen zu APE in Form von ethoxylierten Tridecylalkoholen mit 2-50 Ethylenoxid-Einheiten in Hydroxybenzonitril-haltigen Suspoemulsionen sind in FR-A-2753603 und WO-A-2005/036962 beschrieben, jedoch ohne Aussage über den Naphathlingehalt. In EP-A-0261492 sind unter anderem Suspoemulsionen der oben genannten Wirkstoffkombination beschrieben die naphthalinhaltige Lösungsmittel enthalten, so dass der Naphthalingehalt in der resultierenden Formulierung 0.5 % übersteigt. So ist beispielsweise bekannt, dass ein Austausch von naphthalinhaltigen durch naphthalinarme Lösungsmittel zu von Grund auf veränderten Lösungs- und Emulsionseigenschaften führen kann bzw. führt. Dies kann in der Folge dann dazu führen, dass bestehende Tensidzusammensetzungen nicht mehr die Formulierbarkeit gewährleisten.

Um die oben genannten Nachteile zu vermeiden, bestand die Aufgabe der vorliegenden Erfindung darin, eine technisch alternative oder gegebenenfalls vorteilhafte Pflanzenschutzmittelformulierung in Form einer o/w-Suspoemulsion (o/w = Öl-in-Wasser) für Wirkstoffe aus der Gruppe der Hydroxybenzonitrile, wie beispielsweise Bromoxynil, oder loxynil sowie weiterer agrochemischer Stoffe bereit zu stellen, die frei von Alkylphenolpolyethoxylaten und/oder naphthalinhaltigen (d.h. < 0.5% Naphthalin) Lösungsmitteln ist.

Diese Aufgabe wird gelöst durch die Bereitstellung einer o/w-Susposemulsion bestehend aus (i) mindestens einem als Herbizid wirksamen Stoff aus der Gruppe der Hydroxybenzonitrile (wie beispielsweise Bromoxynil, oder Ioxynil), (ii) einem oder mehreren von (i) sich unterscheidenden agrochemischen Wirkstoff(en), sowie (iii) einer Kombination aus ein oder mehreren ethoxylierten Tridecylalkoholen, ein oder mehreren Dodecylbenzolsulfonsäuresalzen, ein oder mehreren Verdickem und (iv) eventuell weiteren Hilfs- und Zusatzstoffe.

Die vorliegende Erfindung betrifft somit o/w-Suspoemulsionen bestehend aus
a) 0,1 bis 50% eines oder mehrerer pflanzenwirksamer Hydroxybenzonitrile,
b) 0,1 bis 15% eines oder mehrerer ethoxylierter Tridecylalkohole, bestehend aus 2-50, bevorzugt 3-20, ganz besonders bevorzugt 4-12 Ethylenoxid-Einheiten (EO),
c) 0,01 bis 10% eines oder mehrerer Dodecylbenzolsulfonsäuresalze
d) 0,01 bis 2% eines oder mehrerer Verdicker,
e) 0,1 bis 45% eines oder mehrerer weiterer von a) verschiedene agrochemische Wirkstoffe,
f) 0,1 bis 35% Hilfs- und Zusatzstoffe, und
g) 20 bis 50% Wasser,
wobei die Formulierungen frei von Alkylphenolpolyethoxylaten sind, und Naphthalin zu einem Anteil von kleiner 0.5% vorliegt.

Die erfindungsgemäßen Suspoemulsionen zeigen eine hervorragende Lagerstabilität. Sie sind bei Raumtemperatur mindestens 2 Jahre lagerstabil und zeigen dabei kein Kristallwachstum.

In einer bevorzugten Ausführungsform enthalten diese Suspoemulsionen
a) 0,5 bis 40% eines oder mehrerer pflanzenwirksamer Hydroxybenzonitrile,
b) 2,0 bis 12% eines oder mehrerer ethoxylierter Tridecylalkohole, bestehend aus 2-50, bevorzugt 3-20, ganz besonders bevorzugt 4-12 Ethylenoxid-Einheiten (EO),
c) 0,1 bis 5% eines oder mehrerer Dodecylbenzolsulfonsäuresalze
d) 0,02 bis 1,2% eines oder mehrerer Verdickers,
e) 3,5 bis 40% eines oder mehrerer weiterer von a) verschiedene agrochemische Wirkstoffe,
f) 0,15 bis 12% Hilfs - und Zusatzstoffe, und
g) 20 bis 50% Wasser.

Besonders bevorzugt sind erfindungsgemäße Suspoemulsionen, enthaltend:
a) 0,5 bis 32% eines oder mehrerer pflanzenwirksamer Hydroxybenzonitrile,
b) 4 bis 10% eines oder mehrerer ethoxylierter Tridecylalkohole, bestehend aus 2-50, bevorzugt 3-20, ganz besonders bevorzugt 4-12 Ethylenoxid-Einheiten (EO),
c) 0,2 bis 2% eines oder mehrerer Dodecylbenzolsulfonsäuresalze
d) 0,05 bis 0,8% eines oder mehrerer Verdicker
e) 3,5 bis 40% eines oder mehrerer weiterer von a) verschiedene agrochemische Wirkstoffe,
f) 0,15 bis 12% Hilfs - und Zusatzstoffe, und
g) 20 bis 50% Wasser.

Alle vorstehend in Prozent gemachten Angaben beziehen sich auf Gewichtsprozente [Gew.%]).

Die zuvor bevorzugt genannten Bereiche der einzelnen Stoffgruppen der erfindungsgemäßen Suspoemulsionen sind miteinander frei kombinierbar.

Bezüglich des oben genannten Mischungspartners (a) gelten aus der Gruppe der pflanzenwirksamen Hydroxybenzonitrile als bevorzugt Bromoxynil bzw. loxynil, die beispielsweise als deren Ester (Heptanoat, Octanoat und/oder Butyrat) oder aber als Kalium-Salz (Bromoxynil) bzw. Natrium-Salz (Ioxynil) vorliegen können, ganz besonders Bromoxynil in Form des Heptanoats, Ocatanoats, oder als Kalium Salz, oder Mischungen der Ester, oder aber Mischungen der Ester mit dem Natrium bzw. Kaliumsalz des jeweiligen Hydroxybenzonitrils.

Als oben genannter Mischungspartner b) eignen sich handelübliche Tridecylalkohole mit 2-50 Ethylenoxideinheiten (EO). Beispielhaft sind in diesem Zusammenhang Rhodasurf® (Rhodia), Lutensol® (BASF) und Genapol® X (Clariant) zu nennen.

Als oben genannter Mischungspartner c) eignen sich beispielsweise handelsübliche Ca- beziehungsweise Isopropylamin-Dodecylbenzolsulfonate, die in Lösungsmitteln wie Isopropanol, Ocatanol oder Solvesso™ gelöst sein können. Beispielhaft sind in diesem Zusammenhang Libramul IPA™ (Libra Chemicals), Ca-70® (Clariant) und Rhodacal® (Rhodia) zu nennen.

Geeignete Verdickungsmittel (Mischungspartner d)) sind beispielsweise:
1) modifizierte natürliche Silikate, wie chemisch modifizierte Bentonite, Hectorite, Attapulgite, Montmorillonite, Smektite oder andere Silikatmineralien, wie Bentone® (Elementis), Attagel® (Engelhard), Agsorb® (Oil-Dri Corporation) oder Hectorite™ (Akzo Nobel)
2) synthetische Silikate, wie Silikate der Sipernat®-, Aerosil®- oder Durosil®-Reihe (Degussa), der CAB-O-SIL®-Reihe (Cabot) oder der Van Gel-Reihe (R.T. Vanderbilt),
3) Verdicker auf Basis synthetischer Polymere, wie Verdicker der Thixin®- oder Thixatrol®-Reihe (Elementis) sowie Rhodopol® (Rhodia) und Kelzan® S (Kelco Corp.).

Bevorzugt sind Verdicker aus der Gruppe der Bentonite.

Als agrochemische Wirkstoffe der Gruppe e) sind beispielsweise geeignet (in Klammern ist der jeweilige Wirkstoff gemäß IUPAC-Nomenklatur bezeichnet):
a) Wirkstoffe aus der Klasse der 1,3,5-Triazine und 1,2,4-Triazinone wie beispielsweise Ametryn (N²-ethyl-N⁴-isopropyl-6-methylthio-1,3,5-triazine-2,4-diamine), Atrazin (6-chloro-N²-ethyl-N⁴-isopropyl-1,3,5-triazine-2,4-diamine), Aziprotryne (4-azido-N-isopropyl-6-mehtylthio-1,3,5-triazine-2,4-diamine), Cyanazine (2-[4-chloro-6-(ethylamino)-1,3,5-triazine-2-ylamino), Methoprotryne (N²-isopropyl-N⁴-(3-methoxypropyl)-6-methylthio-1,3,5-triazine-2,4-triazine), Metribuzin (4-amino-6-*tert*-butyl-3-methylthio-1,2,4-triazine-5(4H)-one), Prometryn (N²,N⁴-di-isopropyl-6-methylthio-1,3,5-triazine-2,4,diamine), Prometon (N²,N⁴-di-isopropyl-6-methoxy-1,3,5-triazine-2,4-diamine, Propazin (6-chloro-N²,N⁴-di-isopropyl-1,3,5-triazine-2,4-diamine), Simetryn (N²,N⁴-diethyl-6-methylthio-1,3,5-triazine-2,4-diamine), Simazin (6-chloro-N²,N⁴-diethyl-1,3,5-triazine-2,4-diamine), Terbuthylazin (N²-*tert*-butyl-6-chloro-N⁴-ethyl-1,3,5-triazine-2,4-diamine), Terbutryn (N²-*tert*-butyl-N⁴-ethyl-6-methylthio-1,3,5-triazine-2,4-diamine) und Trietazin (6-chloro-N²,N²,N⁴-triethyl-1,3,5-triazine-2,4-diamine), hiervon bevorzugt Atrazin, Simazin und Terbuthylazin, besonders bevorzugt Atrazin und Terbuthylazin, ganz besonders bevorzugt Terbuthylazin;
b) Wirkstoffe auf der Basis der Triketone, wie Mesotrione (2-(4-mesyl-2-nitrobenzoyl)cyclohexane-1,3-dione) und Sulcotrione (2-(2-chloro-4-mesylbenzoyl)cyclohexane-1,3-dione);
c) Wirkstoffe auf Basis von Aryloxyaklanoylsäure, wie 2,4-D (2,4-dichlorophenoxy)acetic acid);
sowie jeweils deren Derivate in Form von Säuren oder Estern. Diese Wirkstoffe sind z.B. bekannt aus "The Pesticide Manual", 12. Auflage (2000), The British Crop Protection Council.

Die weiteren Hilfs- und Zusatzstoffe f) sind beispielsweise Lösungsmittel wie naphthalinfreies Solvesso™, Xylol, Alkylbenzole, Frostschutzmittel, Entschäumer, strukturbildende Stoffe, Konservierungsmittel, Farb- und Duftstoffe, Netz-, Anti-Drift-, Haft-, Penetrationsmittel, Antioxidantien, sowie weitere Tenside.

Geeignete Frostschutzmittel sind solche aus der Gruppe der Harnstoffe, Diole und Polyole, wie Ethylenglycol und Propylenglycol.
Geeignete Entschäumer sind solche auf Basis von Siliconen.
Geeignete strukturbildende Stoffe sind solche aus der Gruppe der Xanthane.
Geeignete Konservierungsmittel, Farb- und Duftstoffe sind dem Fachmann bekannt.
Geeignete weitere Tenside sind beispielsweise Emulgatoren und Dispergatoren wie
1) polyalkoxylierte, vorzugsweise polyethoxylierte Emulgatoren/Dispergatoren, die ionisch modifiziert sind, z. B. durch Umsetzung der endständigen freien Hydroxylfunktion des Polyethylenoxidblocks zu einem Sulfat- oder Phosphatester (z. B. als Alkali- und Erdalkalimetallsalze), wie z. B. Genapol^{®}LRO oder Dispergiermittel 3618 (Clariant), Emulphor^{®} (BASF) oder Crafol^{®}AP (Cognis),
2) Alkali- und Erdalkalimetallsalze von Alkylarylsulfonsäuren mit linearer oder verzweigter Alkylkette, wie Phenylsulfonat CA oder Phenylsulfonat CAL (Clariant), Atlox^{®} 3377BM (ICI), Emplphos^{®}TM-Reihe (Huntsman)
3) Polyelektrolyte, wie Ligninsulfonate, Kondensationsprodukte aus Naphthalinsulfonat und Formaldehyd, Polystyrolsulfonat oder sulfonierte ungesättigte oder aromatische Polymere (Polystyrole, Polybutadiene oder Polyterpene), wie Tamol^{®}-Reihe (BASF), Morwet^{®}D425 (Witco), Kraftsperse^{®}-Reihe (Westvaco), Borresperse^{®}-Reihe (Borregard).

Die vorstehend genannnten Formulierungshilfsmittel der Gruppen b), c), d) und f) sind dem Fachmann bekannt und werden beispielsweise beschrieben in: Watkins, "Handbook of Insecticide Dust Diluents and Carriers", 2nd Ed., Dariand Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986, in H. Mollet und A. Grubenmann, "Formulierungstechnik", Wiley-VCH-Verlag GmbH, 2000

Zur Anwendung können die erfindungsgemäßen Suspoemulsionen in üblicher Weise verdünnt werden, z.B. mittels Wasser. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche herbiziden Mittel, auf Basis der erfindungsgemäßen Suspoemulsionen.

Die herbiziden Mittel weisen eine ausgezeichnete herbizide Wirksamkeit gegen ein breites Spektrum wirtschaftlich wichtiger Schadpflanzen auf. Auch schwer bekämpfbare perennierende Unkräuter, die aus Rhizomen, Wurzelstöcken oder anderen Dauerorganen austreiben, werden gut erfaßt. Dabei können die Mittel z.B. im Vorsaat-, Vorauflauf- oder Nachauflaufverfahren ausgebracht werden. Im einzelnen seien beispielhaft einige Vertreter der Unkrautflora genannt, die durch die erfindungsgemäßen herbiziden Mittel kontrolliert werden können, ohne daß durch die Nennung eine Beschränkung auf bestimmte Arten erfolgen soll.

So werden z.B. *Abutilon theophrasti, Amaranthus spp., Ambrosia spp, Chenopodium album, Conyza canadensis, Datura stramonium, Euphorbia dentata, Helianthus annus, Hibiscus trionum, Ipomoea spp., Jacquemontia tamnifolia, Kochia scoparia, Phytolacca americana, Polygonum spp. Sesbania exaltata, Sida spinosus, Sinapis arvensis, Solanum spp., Tribulus terrestris, Xanthium strumarium* bei Anwendung der erfindungsgemäßen Suspoemulsionen sehr gut kontrolliert, wobei die Effizienz gegenüber einzelnen Unkräutern durchaus in Abhängigkeit der gewählten Mischungspartner (a) und (e) variieren kann.

Werden die erfindungsgemäßen herbiziden Mittel vor dem Keimen auf die Erdoberfläche appliziert, so wird entweder das Auflaufen der Unkrautkeimlinge vollständig verhindert, oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel im Nachauflaufverfahren tritt ebenfalls sehr rasch nach der Behandlung ein drastischer Wachstumsstop ein, und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den herbiziden Mitteln verwendeten und wirksamen Dosierungen von herbiziden Verbindungen so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Mittel hinsichtlich der beschriebenen Eigenschaften deutlich übertroffen.

Die erfindungsgemäßen herbiziden Mittel eignen sich sehr gut zur selektiven Bekämpfung von unerwünschtem Pflanzenwuchs in landwirtschaftlichen Nutzpflanzungen oder in Zierpflanzungen, vor allem in Kulturpflanzen wirtschaftlich bedeutender Gramineen-Kulturen wie Weizen, Gerste, Roggen, Hafer, Hirse, Mais sowie Turf-Gras, aber auch in Kulturen wie beispielswise von Zwiebeln, Lauch, Knoblauch, Flachs, Zuckerrohr, die allesamt nur unwesentlich oder gar nicht geschädigt werden.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Emteerleichterung wie z.B. durch Auslösen von Desikkation und Wuchsstauchung eingesetzt werden. Des weiteren eignen sie sich auch zur generellen Steuerung und Hemmung von unerwünschtem vegetativen Wachstum, ohne dabei die Pflanzen abzutöten.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt. Bevorzugt ist die Anwendung der erfindungsgemäßen herbiziden Mittel in wirtschaftlich bedeutenden transgenen Kulturen von Nutz- und Zierpflanzen, z. B. von Gramineen-Kulturen wie Weizen, Gerste, Roggen, Hafer, Hirse und Mais oder auch in Kulturen wie beispielswise von Zwiebeln, Lauch, Knoblauch, Flachs, Zuckerrohr. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem Pflanzenwuchs, vorzugsweise in Pflanzenkulturen wie Getreide (z.B. Weizen, Gerste, Roggen, Hafer, Mais, Hirse und Zuckerrohr, Zwiebeln, Lauch, Knoblauch, Flachs, besonders bevorzugt in monokotylen Kulturen wie Getreide, z.B. Weizen, Gerste, Roggen, Hafer, Kreuzungen davon wie Triticale, Reis, Mais und Hirse, besonders bevorzugt in Mais, wobei man ein oder mehrere erfindungsgemäße herbizide Mittel auf die Schadpflanzen, Pflanzenteile, Pflanzensamen oder die Fläche auf der die Pflanzen wachsen, z.B. die Anbaufläche appliziert.

Die Herstellung der erfindungsgemäßen Suspoemulsionen erfolgt in zwei Schritten und wird in einer dem Fachmann bekannter Weise beispielsweise durch Nassvermahlung mittels Perlmühle bewerkstelligt, siehe dazu Winnacker-Küchler, "Chemische Technologie", Band 7, C. Hanser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London.

Zur Herstellung der in Tabelle 1 genannten Beispiele werden zunächst die agrochemisch wirksamen Stoffe gemeinsam mit den ausgewählten Hilfsstoffen durch Feinvermahlung mittels geeigneter Perlmühlen dargestellt. Danach wird der erzeugten wässrigen Phase unter Rühren die organische Phase bestehend aus Lösungsmittel, agrochemischen Wirkstoffen und Hilfsmittel zugegeben, wobei die organische Phase als feinverteilte Tröpfchen in der wässrigen Phase neben den dispergierten Partikeln des dortigen Aktivstoffes vorliegt.

In der nachfolgenden Tabelle 1 finden sich Beispiele für erfindungsgemäße Suspoemulsionen.

Die in den nachfolgenden Beispielen verwendeten Begriffe (im Falle kommerziell erhältlicher Produkte, ist der jeweilige Hersteller in Klammern angegeben) haben folgende Bedeutung:

| | |
|---|---|
| Bentone^{®} | = modifiziertes Schichtsilikat (Elementis) |
| EO | = Ethylenoxid |
| Crafol^{®} AP 261 | = Natriumlauryletherphosphat (Cognis) |
| Libramul IPA™ | = Isopropylaminsalz der Doedecylbenzolsulfonsäure |
| Solvesso™ 200 ND | = aromatischer Kohlenwasserstoff (Exxon Mobil Chemicals) mit Naphthalinanteil < 0.5% |
| Soprophor® FL 60 | = Tristyrylphenol mit 16 EO-Einheiten, phosphatiert und mit Triethylamin neutralisiert (Rhodia) |
| Rhodorsil® 454 | = Polydimethylsilixan (Rhodia) |

**Tabelle 1 (alle Angaben in Gewichtsprozent)**

| | **Komponente** | | **Beispiel Nr.** | | | | | | | | | | | | |
|---|---|---|---|---|---|---|---|---|---|---|---|---|---|---|---|
| | | **1** | **2** | **3** | **4** | **5** | **6** | **7** | **8** | **9** | **10** | **11** | **12** | **13** | **14** |
| a | Bromoxynil octanoat | 9.5 | 9.8 | 10.0 | 20.0 | | 9.8 | 9.5 | 30.5 | | 28.0 | | 9.9 | 10.0 | 10.0 |
| a | Bromoxynil hepatnoat | 9.0 | 8.8 | 9.0 | | 20.0 | 8.8 | 9.0 | | 29.0 | | 27.0 | 8.8 | 9.0 | 9.0 |
| b | Ethoxylierter Tridecylalkohol mit 10EO-Einheiten | 6.1 | 6.0 | 7.0 | 6.5 | 6.5 | 6.0 | 6.5 | 8.0 | 8.0 | 9.0 | 10.0 | 6.1 | 7.0 | 8.0 |
| c | Dodecylbenzolsulfonsäure IPA Salz | 0.3 | 0.4 | 0.4 | 0.5 | 0.5 | | | | 0.5 | | | 0.3 | | |
| c | Dodecylbenzolsulfonsäure Ca²⁺-Salz | | | | | | 0.4 | 0.38 | 0.4 | | 0.4 | 0.4 | | 0.25 | 0.3 |
| d | Bentone® | 0.1 | 0.1 | 0.08 | 0.1 | 0.1 | 0.1 | 0.12 | 0.1 | 0.1 | 0.1 | 0.08 | 0.1 | 0.1 | 0.1 |
| e | Atrazin | | | | | | | 26.0 | | | | 22.0 | | | |
| e | Simazin | | | | | | 25.0 | | | | 21.0 | | | | |
| e | Terbuthylazin | 29.0 | 28.8 | 30.0 | 27.0 | 27.0 | | | 20.0 | 20.0 | | | 28.9 | 25.9 | 29.0 |
| f | Solvesso ™200 ND | 6.5 | 6.5 | 8.0 | 7.1 | 7.5 | 7.0 | 6.5 | 9.0 | 10.0 | 11.0 | 12.0 | 5.7 | 7.0 | 8.0 |
| f | Propylenglykol | 2.9 | 3.0 | 2.5 | 2.4 | 3.0 | 2.5 | 3.0 | 2.0 | 1.0 | 0.5 | 0.5 | 2.9 | 3.0 | 2.0 |
| f | Soprophor® FL60 | 2.0 | 2.0 | 2.0 | 2.5 | 2.0 | 1.8 | 2.0 | 3.0 | 3.0 | 2.5 | 3.0 | 2.0 | 2.0 | 2.0 |
| f | Rhodorsil ® 454 | 0.21 | 0.20 | 0.20 | 0.20 | 0.20 | 0.17 | 0.20 | 0.20 | 0.20 | 0.20 | 0.20 | 0.22 | 0.30 | 0.20 |
| g | Wasser | 34.39 | 34.4 | 30.82 | 33.7 | 33.2 | 38.43 | 36.8 | 26.8 | 28.2 | 27.3 | 24.82 | 35.08 | 35.45 | 31.4 |
| | Gesamt | 100 | 100 | 100 | 100 | 100 | 100 | 100 | 100 | 100 | 100 | 100 | 100 | 100 | 100 |

Zum Vergleich zu den in Tabelle 1 aufgeführten Beispielen zeigen die in nachfolgend aufgeführter Tabelle 2 dargestellten Formulierungen alle die Effekte, dass sie Agglomerate ausbilden und nicht fließfähig sind.

Als wesentliches Unterscheidungsmerkmal ist der Austausch des ethoxylierten Tridecylalkohols mit 10 EO-Einheiten (= Komponente "b" in Tabelle 1) gegen die Komponenten Emulsogen EL 400 (= Rhizinusöl mit 40 Ethylenoxid-Einheiten (EO); Clariant), Soprophor™ CY/8 (=Tristyrylphenol mit 20 Ethylenoxid-Einheiten (EO); Clariant) bzw. Soprophor™ S 25 (Tristyrylphenol mit 25 Ethylenoxid-Einheiten (EO); Clariant) - in Tabelle 2 als "b*" benannt.

**Tabelle 2**

| | **Komponente** | **1** | **2¹⁾** | **3¹⁾** |
|---|---|---|---|---|
| a | Bromoxynil octanoat | 9.8 | 9.8 | 10.0 |
| a | Bromoxynil hepatnoat | 9.0 | 9.0 | 9.0 |
| b* | Emulsogen EL 400 | 6.1 | | |
| b* | Soprophor™ CY/8 | | 6.1 | |
| b* | Soprophor™ S 25 | | | 6.1 |
| c | Libramul IPA | 0.3 | 0.3 | 0.3 |
| e | Terbuthylazin | 25.3 | 25.3 | 25.3 |
| f | Soprophor® FL/60 | 2.0 | 2.0 | 2.0 |
| f | Rhodorsil® 454 | 0.2 | 0.2 | 0.2 |
| f | Propylenglykol | 2.9 | 2.9 | 2.9 |
| g | Wasser | 44.4 | 44.4 | 44.2 |
| | Gesamt: | 100 | 100 | 100 |

| | | | | |
|---|---|---|---|---|
| ¹⁾ gemäß EP-A-0261492 | | | | |

### Chemische Stabilität der erfindungsgemäßen Suspoemulsionen

Die erfindungsgemäßen Suspoemulsionen der in Tabelle 1 genannten Beispiele 1 bis 14 weisen allesamt eine ausgezeichnete Lagerstabilität auf. Sie sind bei Raumtemperatur mindestens 2 Jahre und bei 50°C mindestens 3 Monate ohne erkennbare Veränderung stabil.

### Herbizide Wirkung

Die herbizide Wirkung der erfindungsgemäßen Suspoemulsionen und erfindungsgemäßen herbiziden Mittel gegenüber allen wichtigen Schadpflanzen in Nutzpflanzenkulturen, für die eine Wirkung der jeweils verwendeten Komponenten (a) bzw. (e) bekannt ist, erreicht mindestens die Höhe der aus dem Stand der Technik bekannten Alkylphenolpolyethoxylat- bzw. naphthalinhaltigen (≥0.5%) Suspoemulsionen, die mindestens ein pflanzenwirksames Hydroxybenzonitril als agrochemischen Wirkstoff enthalten.

## Patentansprüche

1. Öl-in-Wasser-Suspoemulsionen (o/w Suspoemulsionen) enthaltend
a) 0,1 bis 50% eines oder mehrerer pflanzenwirksamer Hydroxybenzonitrile,
b) 0,1 bis 15% eines oder mehrerer ethoxylierter Tridecylalkohole, bestehend aus 2-50 Ethylenoxid-Einheiten (EO),
c) 0,01 bis 10% eines oder mehrerer Dodecylbenzolsulfonsäuresalze
d) 0,01 bis 2% eines oder mehrerer Verdicker,
e) 0,1 bis 45% eines oder mehrerer weiterer von a) verschiedener agrochemische Wirkstoffe,
f) 0,1 bis 35% Hilfs- und Zusatzstoffe, und
g) 20 bis 50% Wasser,
wobei die Formulierungen frei von Alkylphenolpolyethoxylaten sind, und Naphthalin zu einem Anteil von kleiner 0.5% vorliegt.

2. Suspoemulsion gemäß Anspruch 1, enthaltend
a) 0,5 bis 40% eines oder mehererer pflanzenwirksamer Hydroxybenzonitrile,
b) 2,0 bis 12% eines oder mehrerer ethoxylierter Tridecylalkohole, bestehend aus 2-50 Ethylenoxid-Einheiten (EO),
c) 0,1 bis 5% eines oder mehrerer Dodecylbenzolsulfonsäuresalze
d) 0,02 bis 1,2% ein oder mehrerer Verdicker,
e) 3,5 bis 40% eines oder mehrerer weiterer von a) verschiedener agrochemische Wirkstoffe,
f) 0,15 bis 12% Hilfs - und Zusatzstoffe, und
g) 20 bis 50% Wasser.

3. Suspoemulsion gemäß Anspruch 1, enthaltend
a) 0,5 bis 32% eines oder mehrerer pflanzenwirksame Hydroxybenzonitrile,
b) 4 bis 10% eines oder mehrerer ethoxylierter Tridecylalkohole, bestehend aus 2-50 Ethylenoxid-Einheiten (EO),
c) 0,2 bis 2% eines oder mehrerer Dodecylbenzolsulfonsäuresalze
d) 0,05 bis 0,8% eines oder mehrerer Verdicker
e) 3,5 bis 40% eines oder mehrerer weiterer von a) verschiedener agrochemische Wirkstoffe,
f) 0,15 bis 12% Hilfs - und Zusatzstoffe, und
g) 20 bis 50% Wasser.

4. Suspoemulsion gemäß einem oder mehreren der Ansprüche 1 bis 3, worin die Komponente a) einem Bromoxynil oder einem loxynil entspricht.

5. Suspoemulsion gemäß einem oder mehreren der Ansprüche 1 bis 4, worin der ethoxylierte Tridecylalkohol (Komponente b)) aus 3-20 Ethylenoxydeinheiten (EO) besteht.

6. Suspoemulsion gemäß einem oder mehreren der Ansprüche 1 bis 4, worin der ethoxyliert Tridecylalkohol (Komponente b)) aus 4-12 Ethylenoxydeinheiten (EO) besteht.

7. Suspoemulsion gemäß einem oder mehreren der Ansprüche 1 bis 6, worin der Verdicker (Komponente d) einem modifizierten natürlichen Silikat entspricht.

8. Suspoemulsion gemäß einem oder mehreren der Ansprüche 1 bis 6, worin der Verdicker (d) einem modifizierten Bentonite entspricht.

9. Suspoemulsion gemäß einem oder mehreren der Ansprüche 1 bis 8, worin der von a) verschiedene agrochemische Wirkstoff (e) einem Wirkstoff aus der Gruppe der 1,3,5-Triazine oder 1,2,4-Triazinone entspricht

10. Suspoemulsion gemäß einem oder mehreren der Ansprüche 1 bis 8, worin der von a) verschiedene agrochemische Wirkstoff (e) einem Atrazin entspricht.

11. Suspoemulsion gemäß einem oder mehreren der Ansprüche 1 bis 8, worin der von a) verschiedene agrochemische Wirkstoff (e) einem Terbuthylazin entspricht.

12. Verfahren zur Herstellung einer Suspoemulsion gemäß einem oder mehreren der Ansprüche 1 bis 11, worin die Komponenten gemischt und gegebenenfalls vermahlen werden.

13. Verfahren zur Bekämpfung von unerwünschtem Pflanzenwuchs, worin eine wirksame Menge einer Suspoemulsion gemäß einem oder mehreren der Ansprüche 1 bis 11 auf die Pflanzen, Teile der Pflanzen, das Saatgut oder die Fläche auf der Pflanzen wachsen, appliziert wird.

14. Verwendung einer Suspemulsion gemäß einem oder mehreren der Ansprüche 1 bis 11, zur Bekämpfung von unerwünschtem Pflanzenwuchs.

15. Verwendung einer Suspoemulsion gemäß einem oder mehreren der Ansprüche 1 bis 11, zur Herstellung eines herbiziden Mittels.

16. Flüssiges herbizides Mittel, erhältlich durch Verdünnen einer wässrigen Dispersion gemäß einem oder mehreren der Ansprüche 1 bis 11.

## Claims

1. Oil-in-water suspoemulsion (o/w suspoemulsion) comprising
a) 0.1 to 50% of one or more hydroxybenzonitriles which have an effect in plants,
b) 0.1 to 15% of one or more ethoxylated tridecyl alcohols comprising 2-50 ethylene oxide units (EO),
c) 0.01 to 10% of one or more dodecylbenzenesulfonic acid salts,
d) 0.01 to 2% of one or more thickeners,
e) 0.1 to 45% of one or more other agrochemical active substances other than a),
f) 0.1 to 35% of adjuvants and additives, and
g) 20 to 50% of water,
the formulations being free of alkylphenol polyethoxylates, and naphthalene being present in an amount of less than 0.5%.

2. Suspoemulsion according to Claim 1, comprising
a) 0.5 to 40% of one or more hydroxybenzonitriles which have an effect in plants,
b) 2.0 to 12% of one or more ethoxylated tridecyl alcohols
comprising 2-50 ethylene oxide units (EO),
c) 0.1 to 5% of one or more dodecylbenzenesulfonic acid salts,
d) 0.02 to 1.2% of one or more thickeners,
e) 3.5 to 40% of one or more other agrochemical active substances other than a),
f) 0.15 to 12% of adjuvants and additives, and
g) 20 to 50% of water.

3. Suspoemulsion according to Claim 1, comprising
a) 0.5 to 32% of one or more hydroxybenzonitriles which have an effect in plants,
b) 4 to 10% of one or more ethoxylated tridecyl alcohols comprising 2-50 ethylene oxide units (EO),
c) 0.2 to 2% of one or more dodecylbenzenesulfonic acid salts,
d) 0.05 to 0.8% of one or more thickeners,
e) 3.5 to 40% of one or more other agrochemical active substances other than a),
f) 0.15 to 12% of adjuvants and additives, and
g) 20 to 50% of water.

4. Suspoemulsion according to one or more of Claims 1 to 3, in which component a) corresponds to a bromoxynil or an ioxynil.

5. Suspoemulsion according to one or more of Claims 1 to 4, in which the ethoxylated tridecyl alcohol (component b)) consists of 3-20 ethylene oxide units (EO).

6. Suspoemulsion according to one or more of Claims 1 to 4, in which the ethoxylated tridecyl alcohol (component b)) consists of 4-12 ethylene oxide units (EO).

7. Suspoemulsion according to one or more of Claims 1 to 6, in which the thickener (component d) corresponds to a modified natural silicate.

8. Suspoemulsion according to one or more of Claims 1 to 6, in which the thickener (d) corresponds to a modified bentonite.

9. Suspoemulsion according to one or more of Claims 1 to 8, in which the agrochemical active substance (e) which is other than a) corresponds to an active substance from the group of the 1,3,5-triazines or the 1,2,4-triazinones.

10. Suspoemulsion according to one or more of Claims 1 to 8, in which the agrochemical active substance (e) which is other than a) corresponds to an atrazine.

11. Suspoemulsion according to one or more of Claims 1 to 8, in which the agrochemical active substance (e) which is other than a) corresponds to a terbuthylazine.

12. Process for the preparation of a suspoemulsion according to one or more of Claims 1 to 11, in which the components are mixed, and if appropriate, ground.

13. Method of controlling undesired vegetation, in which an effective amount of a suspoemulsion according to one or more of Claims 1 to 11 is applied to the plants, parts of the plants, the seeds or the area on which the plants grow.

14. Use of a suspoemulsion according to one or more of Claims 1 to 11 for controlling undesired vegetation.

15. Use of a suspoemulsion according to one or more of Claims 1 to 11 for the preparation of a herbicidal composition.

16. Liquid herbicidal composition, obtainable by diluting an aqueous dispersion according to one or more of Claims 1 to 11.

## Revendications

1. Suspoémulsions huile-dans-eau (suspoémulsions h/e) contenant
a) 0,1 à 50 % d'un ou de plusieurs hydroxybenzonitriles actifs sur les plantes,
b) 0,1 à 15 % d'un ou de plusieurs alcools tridécyliques éthoxylés, constitués par 2-50 unités oxyde d'éthylène (EO),
c) 0,01 à 10 % d'un ou de plusieurs sels d'acide dodécylbenzènesulfonique,
d) 0,01 à 2 % d'un ou de plusieurs épaississants,
e) 0,1 à 45 % d'une ou de plusieurs autres substances actives agrochimiques différentes de a),
f) 0,1 à 35 % d'adjuvants et additifs, et
g) 20 à 50 % d'eau,
les compositions étant exemptes de produits de polyéthoxylation d'alkylphénols, et le naphtalène étant présent en une proportion inférieure à 0,5 %.

2. Suspoémulsion selon la revendication 1, contenant
a) 0,5 à 40 % d'un ou de plusieurs hydroxybenzonitriles actifs sur les plantes,
b) 2,0 à 12 % d'un ou de plusieurs alcools tridécyliques éthoxylés, constitués par 2-50 unités oxyde d'éthylène (EO),
c) 0,1 à 5 % d'un ou de plusieurs sels d'acide dodécylbenzènesulfonique,
d) 0,02 à 1,2 % d'un ou de plusieurs épaississants,
e) 3,5 à 40 % d'une ou de plusieurs autres substances actives agrochimiques différentes de a),
f) 0,15 à 12 % d'adjuvants et additifs, et
g) 20 à 50 % d'eau.

3. Suspoémulsion selon la revendication 1, contenant
a) 0,5 à 32 % d'un ou de plusieurs hydroxybenzonitriles actifs sur les plantes,
b) 4 à 10 % d'un ou de plusieurs alcools tridécyliques éthoxylés, constitués par 2-50 unités oxyde d'éthylène (EO),
c) 0,2 à 2 % d'un ou de plusieurs sels d'acide dodécylbenzènesulfonique,
d) 0,05 à 0,8 % d'un ou de plusieurs épaississants,
e) 3,5 à 40 % d'une ou de plusieurs autres substances actives agrochimiques différentes de a),
f) 0,15 à 12 % d'adjuvants et additifs, et
g) 20 à 50 % d'eau

4. Suspoémulsion selon une ou plusieurs des revendications 1 à 3, dans laquelle le composant a) correspond à un bromoxynil ou un ioxynil.

5. Suspoémulsion selon une ou plusieurs des revendications 1 à 4, dans laquelle l'alcool tridécylique éthoxylé (composant b)) est constitué par 3-20 unités oxyde d'éthylène (EO).

6. Suspoémulsion selon une ou plusieurs des revendications 1 à 4, dans laquelle l'alcool tridécylique éthoxylé (composant b)) est constitué par 4-12 unités oxyde d'éthylène (EO).

7. Suspoémulsion selon une ou plusieurs des revendications 1 à 6, dans laquelle l'épaississant (composant d) correspond à un silicate naturel modifié.

8. Suspoémulsion selon une ou plusieurs des revendications 1 à 6, dans laquelle l'épaississant (d) correspond à une bentonite modifiée.

9. Suspoémulsion selon une ou plusieurs des revendications 1 à 8, dans laquelle la substance active agrochimique (e) différente de a) correspond à une substance active choisie dans le groupe des 1,3,5-triazines ou des 1,2,4-triazinones.

10. Suspoémulsion selon une ou plusieurs des revendications 1 à 8, dans laquelle la substance active agrochimique (e) différente de a) correspond à une atrazine.

11. Suspoémulsion selon une ou plusieurs des revendications 1 à 8, dans laquelle la substance active agrochimique (e) différente de a) correspond à une terbuthylazine.

12. Procédé pour la préparation d'une suspoémulsion selon une ou plusieurs des revendications 1 à 11, dans lequel on mélange et éventuellement broie les composants.

13. Procédé pour la lutte contre la croissance indésirable de plantes, dans lequel on applique sur les plantes, des parties des plantes, la semence ou l'aire sur laquelle poussent les plantes une quantité efficace d'une suspoémulsion selon une ou plusieurs des revendications 1 à 11.

14. Utilisation d'une suspoémulsion selon une ou plusieurs des revendications 1 à 11, pour la lutte contre la croissance indésirable de plantes.

15. Utilisation d'une suspoémulsion selon une ou plusieurs des revendications 1 à 11, pour la fabrication d'un produit herbicide.

16. Produit herbicide liquide, pouvant être obtenu par dilution d'une dispersion aqueuse selon une ou plusieurs des revendications 1 à 11.
